# EUROPÄISCHE PATENTANMELDUNG

(11) **EP 0 802 347 A1**
(43) Veröffentlichungstag der Anmeldung: **22.10.1997**
(21) Anmeldenummer: 97105579.3
(22) Anmeldetag: 04.04.1997
(51) Int. Cl.: F16G 11/02

(54) **Verfahren zur Herstellung einer Verbindung zwischen einem Pressfitting und einem Drahtseil**

(30) Priorität: 19.04.1996 DE 19615623
(71) Anmelder: Pfeifer Seil- und Hebetechnik GmbH & Co., 87700 Memmingen (DE)
(72) Erfinder: Hoyer, Peter, 87751 Heimertingen (DE); Stauske, Dieter, 87700 Memmingen (DE)
(74) Vertreter: Pfister, Helmut, Dipl.-Ing.

(57) **Zusammenfassung**

Es wird ein Verfahren zur Herstellung einer Verbindung zwischen einem Preßfitting (1) und einem Drahtseil (4) beschrieben, wobei der Preßfitting (1) vor dem Verpressen einer Feuerverzinkung unterworfen wird und anschließend in eine schmelzflüssig eutektische Legierung von Zink und ca. 5 % Aluminium eingetaucht wird. Trotz der nicht unbeträchtlichen Verformung beim Preßvorgang bleibt am Preßfitting (1) eine dichte Korrosionsschutzschicht erhalten.

## Beschreibung

Es ist bekannt, Drahtseile an den Enden, aber auch an beliebigen Stellen des Drahtseils mit einem Preßfitting zu verbinden. Der Preßfitting, der aus Stahl, aber auch aus Aluminium oder einem anderen Material bestehen kann, besitzt dabei einen Hohlraum, in den das Drahtseil eingeführt wird. Anschließend werden auf dem Teil des Preßfittings, der das Drahtseil aufnimmt in radialer Richtung Preßkräfte ausgeübt, die zu einer Verformung des betreffenden Teils des Preßfittings führen. Der Vorgang wird in der Regel ohne Temperaturerhöhung vorgenommen. Bei dem Preßvorgang, bei dem die Wandstärke des betreffenden Teils des Preßfittings auf die Seilkonstruktion abgestimmt ist gelangt das Material des Preßfittings in die Freiräume zwischen den Drähten oder Litzen des Drahtseils, so daß nicht nur eine kraftschlüssige, sondern auch eine formschlüssige Verbindung zwischen dem Drahtseil und dem Fitting erhalten wird. Beim Preßvorgang ergibt sich außerdem eine Längenänderung also Vergrößerung der Länge des betreffenden Teils des Preßfittings.

Preßfittinge werden in der Regel an den Enden des Seiles angeordnet. Sie können beispielsweise Ösenfittinge sein, also eine radial zur Seilausdehnung verlaufende Öffnung für Verbindungsmittel aufweisen. Sie können auch Gabelfittinge sein, wobei dann die beiden Gabelteile in einer geeigneten Ausnehmung einen Bolzen zur Verbindung mit anderen Teilen aufnehmen. Preßfittinge können auch ein Gewinde besitzen, um zu erlauben, daß das Seil mit seinem Fitting durch eine Schraubverbindung mit anderen Bauteilen verbunden wird.

Fittinge der erwähnten Art sind zwar in der Regel an den Enden des Seiles angeordnet. Sie können aber auch längs eines Seiles fixiert sein um beispielsweise einen Anschlag oder auch eine Anschlußmöglichkeit für andere Bauteile zu gewinnen.

Die Öffnungen der Fittinge, die das Drahtseil aufnehmen sind z.B. zylinderisch, um ein Seilende aufzunehmen. Sie können aber auch oval gestaltet werden um zwei Seilstücke, beispielsweise zur Bildung einer Kausche aufzunehmen. Nach dem Verpressen wird auch hierbei eine feste Verbindung erhalten.

Wenn die Preßfittinge aus Stahl geeigneter Qualität bestehen, ergibt sich das Problem des Korrisionsschutzes. Die Preßfittinge und die damit verbundenen Drahtseile werden z.B. im Freien benützt und sind den Witterungseinflüssen ausgesetzt. Ein nachträglich aufgebrachter Korrosionsschutz befriedigt dann nur in Ausnahmefällen. Es kann eine Spritzverzinkung angewandt werden oder auch eine Beschichtung mit Zinkstaubfarbe. Werden die Fittinge vor dem Verpressen mit einer Korrosionsschutzschicht versehen, die durch Feuerverzinkung aufgebracht ist, dann ergibt sich, daß durch die Deformierung während des Preßvorgangs die Zinkschicht die Oberfläche des Fittings nur noch ungenügend abdeckt. Beim Feuerverzinken entsteht offenbar im Zusammenwirken des Stahls mit dem Zink auf der Oberfläche des Fittings zunächst eine Hartzinkschicht und auf der Außenseite der Hartzinkschicht eine Weichzinkschicht. Bei der Verformung des Fittings beim Preßvorgang reißt die Hartzinkschicht auf und der hinreichende Korrosionsschutz geht verloren. Es ist klar, daß auch die Verformungen der äußeren Schichten unter dem Einfluß des Preßwerkzeuges hierbei eine nachteilige Veränderung der Korrosionsschrntzschicht ergeben.

Eine etwaige Überlegung nach dem Preßvorgang eine Verzinkung vorzunehmen führt nicht zum Erfolg. Die Vorbereitung der Oberfläche für den Verzinkungsvorgang im Zinkbad würde zu einem Eindringen der entsprechenden Materialien in das Innere des Fittings führen, was nicht hinnehmbar ist. Darüberhinaus ist das Aufbringen einer Zinkschicht am verarbeiteten Preßfitting aufwendig und umständlich.

Es ist Aufgabe der Erfindung ein Verfahren vorzuschlagen, mit dem es möglich ist eine Verbindung zwischen einem aus Stahl bestehenden Preßfitting einerseits und einem Drahtseil andererseits vorzuschlagen, mit dem es möglich ist, an der fertigen Verbindung einen einwandfreien Korrosionsschutz zu erhalten.

Zur Lösung dieser Aufgabe geht die Erfindung aus von einem Verfahren zur Herstellung einer Verbindung zwischen einem aus Stahl bestehenden Preßfitting einerseits und einem Drahtseil andererseits, wobei durch Feuerverzinkung ein Korrosionsschutz aufgebracht wird. Erfindungsgemäß wird vorgeschlagen, daß der Preßfitting zunächst feuerverzinkt wird, daß anschließend der Preßfitting in eine schmelzflüssige eutektische Legierung von Zink und ca. 5 % Aluminium eingetaucht wird, und daß schließlich der Preßfitting auf ein Drahtseil aufgepreßt wird, wobei der Teil des Preßfittings, der das Drahtseil aufnimmt eine Durchmesserverringerung und eine Längenvergroßerung erfährt.

Wenn der Preßfitting nach dem Feuerverzinken einem weiteren Feuerverzinkungsvorgang unterworfen wird, der in einer schmelzflüssigen eutektischen Legierung von Zink und ca. 5 % Aluminium erfolgt, wird nicht nur der Oberflächenschutz der so behandelten Stahlteile wesentlich verbessert. Es ist gefunden worden, daß der in dieser Weise vorbereitete Preßfitting auch nach dem Verpressungsvorgang noch eine ausreichend geschlossene und den Korrosionsschutz sichernde Oberflächenbeschichtung aufweist. Offenbar bewirkt die angegebene eutektische Legierung nicht nur eine Vergrößerung und Verbesserung der Schutzschicht, sondern auch eine Veränderung der Eigenschaften der Hartzinkschicht. Auf diese Weise wird es möglich, daß beim Preßvorgang die Korrosionsschutzschicht insbesondere den Längenänderungen folgen kann.

Es wurde gefunden, daß das erfindungsgemäße Verfahren insbesondere dann mit Vorteil anwendbar ist, wenn der Verpressungsgrad, das heißt die Längenänderung des das Drahtseil aufnehmenden Teils des Preßfittings ca. 10 - 25 % beträgt. Besonders günstige Verhältnisse werden dann erhalten, wenn die Längenänderung ca. 14 - 20 % beträgt.

Die Drähte des Drahteils, das beim erfindungsgemäßen Verfahren mit dem Preßfitting verbunden wird, kann vor dem Aufpreßvorgang einem Feuerverzinkungsvorgang unterworfen werdne, wie dies an sich bekannt ist. Besonders günstige Ergebnisse werden dann erhalten, wenn auch die Drähte des Drahtseils nach der Feuerverzinkung in eine schmelzflüssige eutektische Legierung von Zink und ca. 5 % Aluminium eingetaucht werden. Die Behandlung von Drähten eines Drahtseils in dieser Weise ist ebenfalls an sich bekannt. Die Anwendung einer derartigen Feuerverzinkung in einer schmelzflüssigen eutektischen Legierung der angegebenen Zusammensetzung hatte aber bisher bei Drahtseilen die Aufgabe, den Korrosionsschutz zu verbessern.

Die Erfindung betrifft weiter einen Preßfitting zur Durchführung des erfindungsgemäßen Verfahrens. Dieser Preßfitting weist auf der Außenfläche des Teils, der das Drahtseil aufnimmt, eine Korrosionsschutzschicht auf, die durch Feuerverzinkung und anschließendes Eintauchen in eine schmelzflüssige eutektische Legierung von Zink und ca. 5 % Aluminium gebildet ist. Bei Korrosionsschutzbehandlung eines Preßfittings im Sinne der Erfindung entsteht naturgemäß auch eine Korrosionsschutzschicht im Inneren der Öffnung, die das Drahtseil aufnimmt. Es ist klar, daß hierdurch der Korrosionsschutz in diesem Bereich verbessert wird.

In der Zeichnung ist ein Ausführungsbeispiel der Erfindung schemetisch dargestellt. Es zeigen:

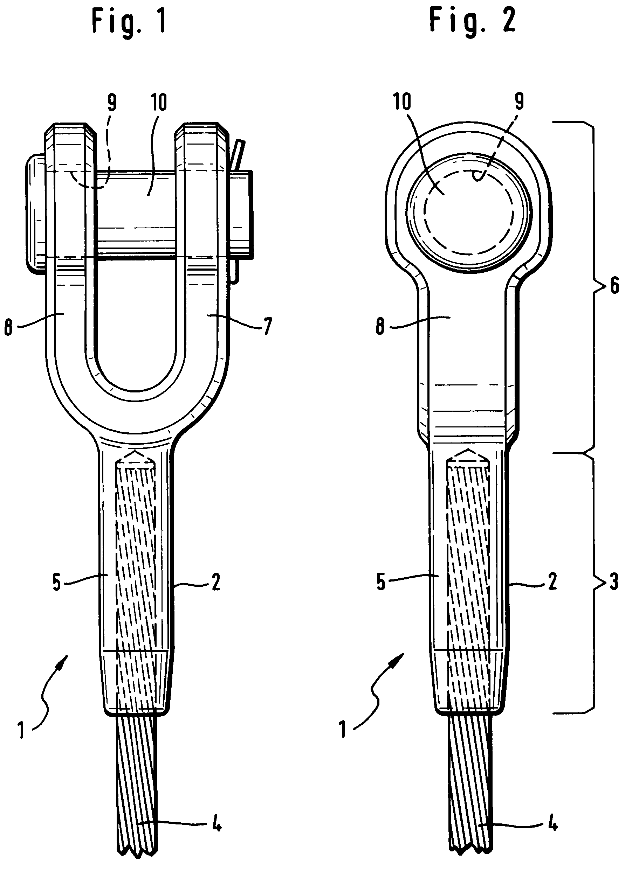

- Fig. 1: eine Ansicht einer Verbindung gemaß der Erfindung und
- Fig. 2: eine Seitenansicht zur Darstellung der Fig. 2.

Im gezeigten Ausführungsbeispiel ist ein Gabelfitting dargestellt. Dieser besteht aus einem Schmiedeteil aus Stahl, beispielsweise aus dem Material C35 gemäß DIN 17200. Der Fitting besteht im wesentlichen aus zwei insbesondere miteinander verbundenen Teilen und zwar dem Teil 3 der das Drahtseil 4 aufnimmt und dem Teil 6 der die Gabel des Fittings bildet. Die beiden Gabelarme 7 und 8 besitzen je eine Bohrung 9 für einen Bolzen 10.

Die Oberfläche des ganzen Preßfittings 1 und zwar insbesondere die Außenfläche 2 des Teils 3 ist mit einer Korrosionsschutzschicht 5 beschichtet, die durch einen Feuerverzinkungsvorgang und durch das Eintauchen in eine schmelzflüssige eutektische Legierung aus Zink und ca. 5 % Aluminium besteht. Die Stärke dieser Korrosionsschicht beträgt insbesamt ca. 100 - 200 µ. Sie kann je nach der Handhabung und Dauer der beiden aneinander anschließenden Verzinkungs- bzw. Eintauchvorgängen in ihrer Stärke beeinflußt werden.

Nach dem Preßvorgang erfährt das Teil 3 ein Vergrößerung seiner Länge in Höhe von etwa 20 %. Gleichzeitig wird der Durchmesser verringert und der Werkstoff des Fittings 1 dringt dabei in die Ausnehmung zwischen den einzelnen Drähten und Litzen des Drahtseils 4 ein.

Es ist klar, daß beim Preßvorgang die Stärke der Korrosionsschutzschicht 5 verringert wird. Sie bleibt aber dick genug und insbesondere hinreichend gleichförmig um einen sicheren Korrosionsschutz zu geben.

Nach dem Preßvorgang ist die Verbindung ohne weitere Maßnahmen verwendungsfähig wenn natürlich auch zusätzliche Maßnahmen zur Verbesserung des Oberflächenschutzes oder auch der äußeren Aussehens angewandt werden können.

Die jetzt mit der Anmeldung und später eingereichten Ansprüche sind Versuche zur Formulierung ohne Präjudiz für die Erzielung weitergehenden Schutzes.

Die in den abhängigen Ansprüchen angeführten Rückbeziehungen weisen auf die weitere Ausbildung des Gegenstandes des Hauptanspruches durch die Merkmale des jeweiligen Unteranspruches hin. Jedoch sind diese nicht als ein Verzicht auf die Erzielung eines selbständigen, gegenständlichen Schutzes für die Merkmale der rückbezogenen Unteransprüche zu verstehen.

Merkmale, die bislang nur in der Beschreibung offenbart wurden, können im Laufe des Verfahrens als von erfindungswesentlicher Bedeutung, zum Beispiel zur Abgrenzung vom Stand der Technik beansprucht werden.

## Patentansprüche

1. Verfahren zur Herstellung einer Verbindung zwischen einem aus Stahl bestehenden Preßfitting einerseits und einem Drahtseil andererseits, wobei durch Feuerverzinkung ein Korrosionsschutz aufgebracht wird, **dadurch gekennzeichnet, daß** der Preßfitting zunächst feuerverzinkt wird, daß anschließend der Preßfitting in eine schmelzflüssige eutektische Legierung von Zink und ca. 5 % Aluminium eingetaucht wird, und daß schließlich der Preßfitting auf ein Drahtseil aufgepreßt wird, wobei der Teil des Preßfittings, der das Drahtseil aufnimmt eine Durchmesserverringerung und eine Längenvergrößerung erfährt.

2. Verfahren nach Anspruch 1, **dadurch gekennzeichnet, daß** der Verpressungsgrad , das heißt die Längenänderung des das Drahtseil aufnehmenden Teils des Preßfittings ca. 10 bis 25 % beträgt.

3. Verfahren nach Anspruch 1 und 2, **dadurch gekennzeichnet, daß** die Längenänderung des das Drahtseil aufnehmenden Teils des Preßfittings ca. 14 bis 20 % beträgt.

4. Verfahren nach einem oder mehreren der vorhergehenden Ansprüche, **dadurch gekennzeichnet, daß** die Drähte des Drahtseils vor dem Aufpreßvorgang einem Feuerverzinkungsvorgang unterworfen werden.

5. Verfahren nach Anspruch 4, **dadurch gekennzeichnet, daß** die Drähte des Drahtseils nach der Feuerverzinkung in eine schmelzflüssige, eutektische Legierung von Zink und ca. 5 % Aluminium eingetaucht werden.

6. Preßfitting zur Durchführung des Verfahrens nach einem oder mehreren der vorhergehenden Ansprüche, **dadurch gekennzeichnet, daß** der Preßfitting insbesondere auf der Außenfläche des Teils, der das Drahtseil aufnimmt eine Korrosionsschutzschicht aufweist, die durch Feuerverzinkung und anschließendes Eintauchen in eine schmelzflüssige eutektische Legierung von Zink und ca. 5 % Aluminium gebildet ist.
